# EUROPEAN PATENT APPLICATION

(11) **EP 1 513 050 A1**
(43) Date of publication of application: **09.03.2005**
(21) Application number: 03733344.0
(22) Date of filing: 10.06.2003
(51) Int. Cl.: G06F 3/033, G06F 3/00

(54) **INFORMATION PROCESSING METHOD FOR SPECIFYING AN ARBITRARY POINT IN 3-DIMENSIONAL SPACE**

(30) Priority: 11.06.2002 JP 2002170184; 26.03.2003 JP 2003084103
(71) Applicant: Sony Computer Entertainment Inc., Tokyo 107-0062 (JP)
(72) Inventor: SUZUKI, Akira, SONY COMPUTER ENTERTAINMENT INC., Tokyo 107-0062 (JP); ENOMOTO, Shigeru, SONY COMPUTER ENTERTAINMENT INC., Tokyo 107-0062 (JP)
(74) Representative: Turner, James Arthur
(86) International application number: PCT/JP2003/007334
(87) International publication number: WO 2003/104967

(57) **Abstract**

A three-dimensional space is displayed on a two-dimensional display screen, a coordinate value and a pressing force value of a point in the two-dimensional display screen designated by a user are detected, and a position within the three-dimensional space is specified according to the coordinate value and pressing force value. This allows a user to easily designate an arbitrary point within a three-dimensional space by designating a point on a two-dimensional display screen. Namely, it is possible to easily designate an arbitrary point within a three-dimensional space by natural operation that is close to the operation in the real world with high accuracy.

## Description

### TECHNICAL FIELD

The present invention relates to an information processing method, a computer readable recording medium having recorded therein an information processing program, an information processing program, and an information processing apparatus, all of which are suitable when applied to processing for designating an arbitrary point within a three-dimensional space displayed on a two-dimensional display screen.

### BACKGROUND ART

Users have heretofore designated a desired point to a system through input devices, such as a mouse pointer, a tablet, and a touch panel or with a finger when designating an arbitrary point within an image displayed on a two-dimensional display screen of a liquid crystal display device, a CRT (Cathode Ray Tube), or the like.

However, conventional systems are so configured as to allow only designation of a point position within a two-dimensional display screen in its in-plane direction, therefore it is impossible to, for example, designate an arbitrary point within a three-dimensional space displayed on a two-dimensional display screen.

The designation of an arbitrary point in a three-dimensional space is possible by using other input devices for designating a point position in a vertical direction (depth direction) (z) to a display screen in addition to an input device for designating a point position (x, y) within a display screen in its in-plane direction, or by directly inputting three-dimensional coordinate values (x, y, z) of the point to designate. However, if these approaches are taken, operations by a user become extremely complicated and a point will not be designated easily.

Designating a point position within a three-dimensional space is also possible by using a three-dimensional mouse pointer, for example. However, since typical three-dimensional mouse pointers are configured to be operated by a user in the air, a lot of effort is needed for a user to designate a point and it is difficult to designate a point correctly to a system.

The present invention was achieved to solve the above problems and an object of the present invention is to provide an information processing method, a computer readable recording medium having recorded therein an information processing program, an information processing program, and an information processing apparatus, all of which enable designation of an arbitrary point in a three-dimensional space displayed on a two-dimensional display screen with easy and natural operation and with high accuracy.

### DISCLOSURE OF THE INVENTION

The first aspect of the present invention consists in displaying a three-dimensional space on a two-dimensional display screen, detecting coordinate values and a depth value of a point within the two-dimensional display screen designated by a user, and specifying the position of the point within the three-dimensional space according to the coordinate values and the depth value. Namely, in the present invention, the position within the three-dimensional space designated by a user is specified based on the point position and the depth value at the position on the two-dimensional display screen designated by a user. According to this configuration, users can designate easily and with high accuracy a point within the three-dimensional space by operations natural and close to an operation in the real world.

The second aspect of the present invention consists in displaying at least one object on a two-dimensional display screen, detecting coordinate values and a depth value of a point on the two-dimensional display screen designated by a user, and executing processing for the object designated by the coordinate values according to the depth value. Namely, in the present invention, a predetermined operation is executed to the object that exists on the point designated by a user according to the depth value. According to this configuration, even users who are not familiar with operating devices can operate an object displayed within a two-dimensional display screen easily and naturally.

### BRIEF DESCRIPTION OF THE DRAWINGS

Figure 1 is a block diagram showing a configuration of an information processing apparatus according to a first embodiment of the present invention;
Figure 2 is a schematic diagram showing a structure of an operation input section according to the first embodiment of the present invention;
Figure 3 is a schematic diagram showing an exemplary application of the operation input section shown in Figure 2;
Figure 4 is a schematic diagram showing connections between pressure-sensitive elements and electric wiring shown in Figure 2;
Figure 5 is a flow chart showing a method of designating three-dimensional coordinate values according to an embodiment of the present invention;
Figure 6 is a schematic diagram illustrating the method of designating three-dimensional coordinate values shown in Figure 5;
Figure 7 is a schematic diagram illustrating an exemplary application of the method of designating three-dimensional coordinate values shown in Figure 6;
Figure 8 is a schematic diagram illustrating an exemplary usage of the method of designating three-dimensional coordinate values shown in Figure 5;
Figure 9 is a schematic diagram illustrating an exemplary usage of the method of designating three-dimensional coordinate values shown in Figure 5;
Figure 10 is a schematic diagram illustrating an exemplary usage of the method of designating three-dimensional coordinate values shown in Figure 5;
Figure 11 is a schematic diagram illustrating an exemplary usage of the method of designating three-dimensional coordinate values shown in Figure 5;
Figure 12 is a schematic diagram illustrating an exemplary usage of the method of designating three-dimensional coordinate values shown in Figure 5;
Figure 13 is a flowchart showing a method of operating an icon according to the embodiment of the present invention;
Figure 14 is a schematic view showing a configuration of the operation input section according to a second embodiment of the present invention;
Figure 15 is a schematic view showing an exemplary application of the operation input section shown in Figure 14;
Figure 16 is a schematic view showing an exemplary application of the operation input section shown in Figure 14;
Figure 17 is a schematic view showing an exemplary application of the operation input section shown in Figure 14;
Figure 18 is a flowchart illustrating operations of an information processing apparatus according to the second embodiment of the present invention;
Figure 19 is a schematic view showing an exemplary application of the operation input section according to the embodiment of the present invention;
Figure 20 is a schematic view showing an exemplary application of the operation input section according to the embodiment of the present invention; and
Figure 21 is a schematic view showing an exemplary application of the operation input section according to the embodiment of the present invention.

### BEST MODE FOR CARRYING OUT THE INVENTION

An information processing apparatus according to the present invention can be applied to processing for causing a device to execute predetermined processing by designating and operating an arbitrary point within a three-dimensional space displayed on a two-dimensional display screen. The configuration and operation of the information processing apparatus will be described in detail below according to first and second embodiments of the present invention.

### FIRST EMBODIMENT

### Configuration of Information Processing Apparatus

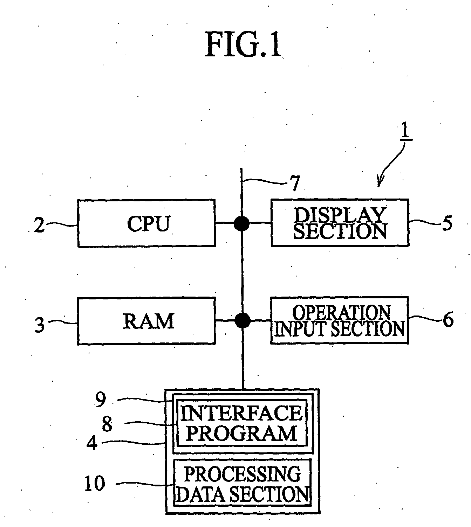

An information processing apparatus 1 according to the first embodiment of the present invention basically comprises, as shown in Figure 1, CPU 2, RAM 3, ROM 4, a display section 5, and an operation input section 6, all of which are electrically connected with one another via a bus line 7.

The CPU 2 consisting of general processor devices controls the operation of the information processing apparatus according to a computer program stored in the ROM 4.

The RAM 3 consisting of volatile semiconductor memory provides a work area in which a computer program for realizing the processing executed by the CPU 2 and processing data are temporarily stored.

The ROM 4 consisting of nonvolatile semiconductor memory comprises a program section 9 for storing computer programs such as a boot program (not shown) of the information processing apparatus or an interface program 8 (described later), and a processing data section 10 for storing processing data necessary for executing computer programs. It should be noted that part or all of computer programs and processing data may be received over an electric network.

The display section 5 comprises a display output device such as a liquid crystal display or CRT (Cathode Ray Tube) and displays on a two-dimensional screen various information such as a three-dimensional object according to instructions from the CPU 2. In other embodiments, the display section 5 may be replaced with a flexible display device made of soft boards such as a plastic film.

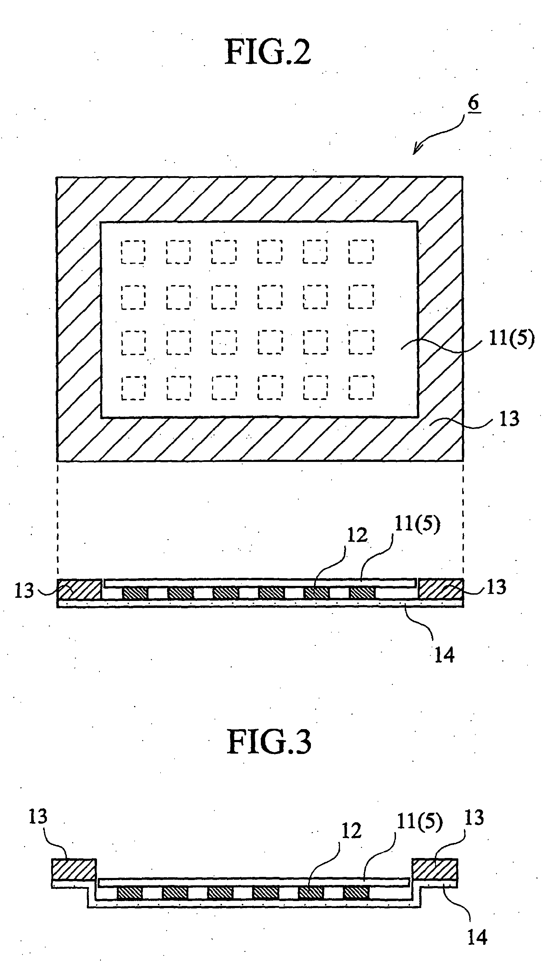

The operation input section 6 comprises a device capable of detecting coordinate values (x, y) and a pressing force value P at an arbitrary point on a two-dimensional screen designated through a depressing operation made by a user with his or her hand or with a predetermined input device. In the first embodiment, the operation input section 6 includes, as shown in Figure 2, a touch panel 11 built in or attached to the display section 5, pressure-sensitive elements 12 arranged on the back surface of the touch panel 11, and a back panel 14 supporting the pressure-sensitive elements 12 from backside.

The touch panel 11 detects coordinate values (x, y) of a point on a two-dimensional screen pressed by a user, in conventional detecting ways using infrared rays, pressures, or electromagnetism. The pressure-sensitive elements 12 detects a pressing force value P at the point on the two-dimensional screen pressed by the user and outputs to the CPU 2 a pressure detection signal indicating the pressing force value P. The back panel 14 is fixed to a main apparatus 13 in the way shown in Figures 2 and 3.

As described above, the operation input section 6 according this embodiment is so designed that a coordinate detecting mechanism (touch panel 11) and a pressing force value detecting mechanism (pressure-sensitive elements 12) are provided on the front and back surfaces of the display section 5, respectively. Therefore, it is possible to make the display section 5 thinner compared to the case where both the coordinate detecting mechanism and the pressing force value detecting mechanism are disposed at the front surface of the display section 5, consequently reducing displacements that may arise between a displayed point and a user-pressed point when a user designates a point while looking at the display section 5 from an oblique angle.

When the pressure-sensitive elements 12 are arranged on the front surface of the display section 5, thin pressure-sensitive elements are usually employed in order to make the display section 5 thinner. However, the operation input section 6 has the pressure-sensitive elements 12 arranged on the back surface of the display section 5, which increases design flexibility such that a detectable range of the pressing force values P is made larger by using the pressure-sensitive elements 12 that are relatively thick, or such that the operation input section 6 is made elastic to some extent. In addition, the pressure-sensitive elements 12 no longer need to be transparent, thereby leading to reduction in manufacturing cost of the operation input section by virtue of inexpensive pressure-sensitive elements.

Again, when the pressure detecting mechanism is arranged on the front surface of the display section 5, some users may feel strange in operating the display section 5 because the surface thereof usually becomes soft. However, the above-mentioned structure of the display section 5 provides appropriate softness to the surface, so users will not feel strange in operations.

In addition, since the back panel 14 is connected to the main apparatus 13 and the touch panel 11 is not fixed to the main apparatus 13, it is possible to accurately detect the pressing force value P at the point pressed by a user.

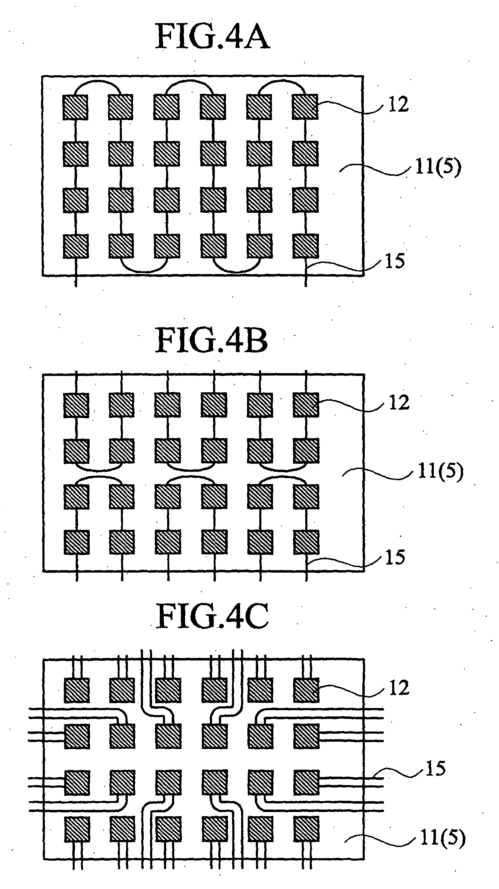

It is also allowable that the pressure-sensitive elements 12 are connected to each other in series through the electric wiring 15 as shown in Figure 4(a), so that the pressing force value P may be detected all over the touch panel 11. Or alternatively, the pressure-sensitive elements 12 may be connected to each other in desired blocks through the electric wiring 15 as shown in Figure 4(b), so that the pressing force value P may be detected in every block. Moreover, each of the pressure-sensitive elements 12 may be connected to the electric wiring 15 as shown in Figure 4(c) so that the pressing force value P may be detected for each of the pressure-sensitive elements 12.

If the user pressing force value P does not match with the pressure detection signal value of the pressure-sensitive elements 12, or if the detection accuracy of the pressing force value P changes depending on positions in a two-dimensional plane, it is desirable to correct both values to be the same by means of an electronic circuit or software processing. Software processing is preferable for the above correction processing because it is able to easily cope with changes in correction values due to aging and differences in average pressing force values due to differences among users or differences of users' ages.

Thus, in the first embodiment of the present invention, the information processing apparatus 1 is configured so that the touch panel 11 and the pressure-sensitive elements 12 can individually detect the coordinate values (x, y) and the pressing force value P, respectively, at an arbitrary point on a two-dimensional display screen designated by a user.

### Operation of Information Processing Apparatus

### "Designation and Selection of Three-dimensional Position"

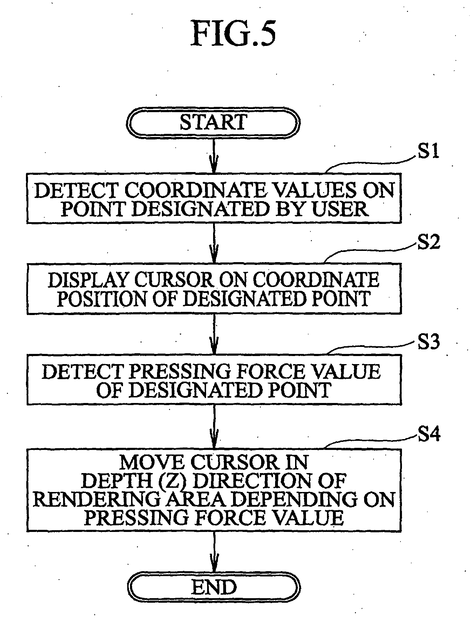

The information processing apparatus 1 having the configuration described above allows users to designate and select an arbitrary three-dimensional position within a three-dimensional space displayed on the display section 5. Referring now to a flowchart in Figure 5, description will be made for operations of the information processing apparatus 1 when a user designates and selects an arbitrary three-dimensional point in a three-dimensional space.

The processing in the flowchart in Figure 5 starts when a user touches a two-dimensional display screen through the touch panel 11 with his or her finger or with a predetermined input device, and the CPU 2 thereafter executes the following processing according to the interface program 8.

In step S1, the CPU 2 detects coordinate values (x, y) at a point 16 on a two-dimensional display screen designated by a user through the touch panel 11 (hereinafter described as a designated point 16). Then, the processing in the step S1 completes and proceeds to step S2.

In step S2, the CPU 2 controls the display section 5 to display a cursor 17 at the detected coordinate values (x, y). Then, the processing in step S2 completes and proceeds to step S3.

In step S3, the CPU 2 detects a pressing force value P at the designated point 16 referring to a pressure detection signal output from the pressure-sensitive elements 12. Then, the processing in step S3 completes and proceeds to step S4.

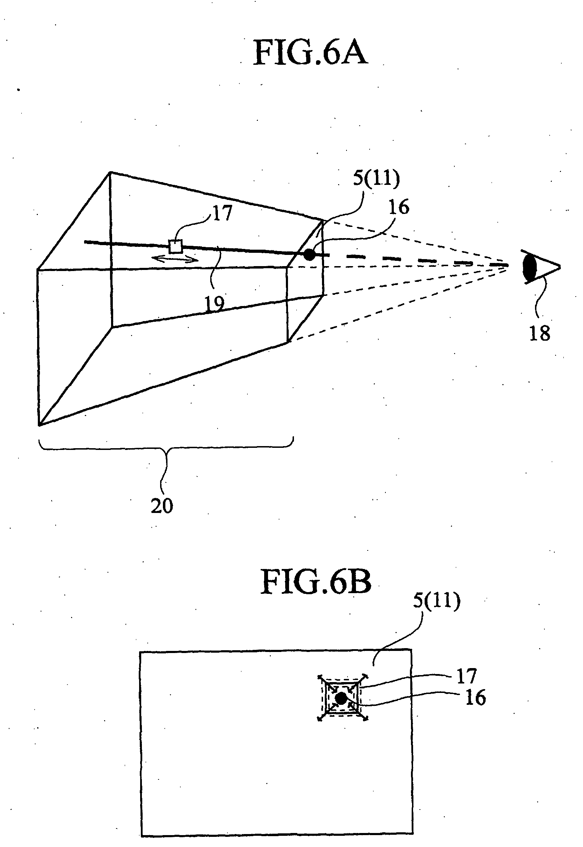

In step S4, as shown in Figure 6, the CPU 2 defines a straight line 19 that is parallel to the user's line of sight 18 and extends from the designated point 16 to the depth (z) direction of a rendering area 20 forming a three-dimensional space. Then, the CPU 2 moves the cursor 17 by a distance corresponding to the pressing force value P along the straight line 19 in the depth (z) direction of the rendering area 20. Subsequently, the CPU 2 specifies a three-dimensional position designated by the user in the rendering area 20 based on the position where the cursor 17 stops with, for example, an indication that an object at the position where the cursor 17 stopped is in a selected state. As a result, the processing in step S4 completes and a series of designation processing ends.

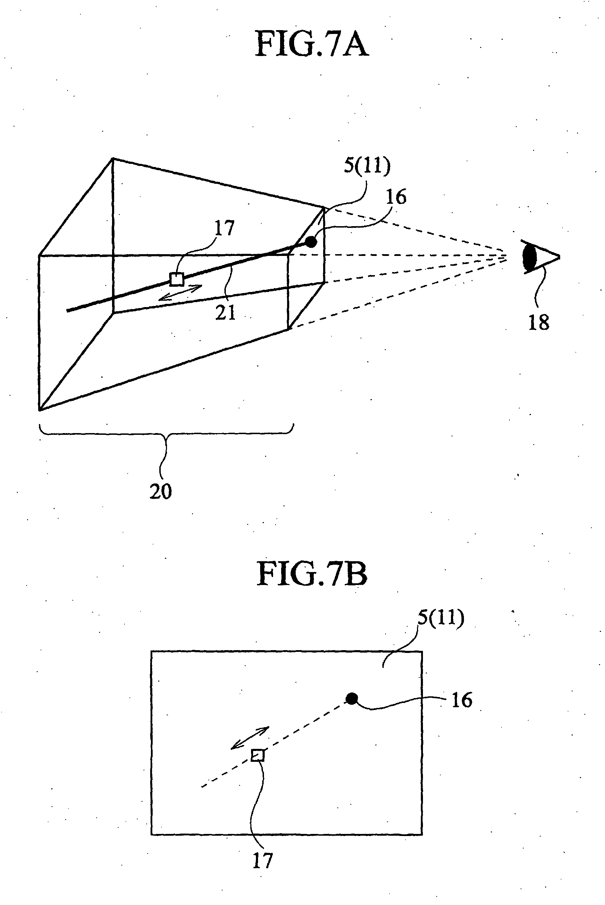

Though the CPU 2 defines the straight line 19 parallel to the user's line of sight 18 in the above processing, the CPU 2 may define a straight line 21 that is not parallel to the user's line of sight 18 and may move the cursor 17 along the straight line 21, as shown in Figure 7. Such constitution makes it easier for a user to recognize the cursor 17 moving in the depth direction of the rendering area 20, compared to the case where the straight line 19 parallel to the user's line of sight 18 is employed. In this case, the CPU 2 may control the display section 5 to display the straight line 19 together with the cursor 17 in order to let the user know the direction to which the cursor 17 is moving.

In addition, it is desirable that rendering processing is performed, such as changing the size, color, or brightness of the cursor 17 depending on the position of the cursor 17 in the depth (z) direction, displaying interference between objects within the three-dimensional space of the rendering area 20 and the cursor 17, displaying grid lines, or displaying the rendering area 20 in three-dimensions, so that the user may easily recognize the cursor 17 moving to the depth direction of the rendering area 20.

Other than the above visual processing, it is desirable that various processing is performed, such as vibrating the display screen or producing sound in response to the interference between the cursor 17 and objects within the rendering area 20, for easy recognition of the cursor 17 moving to the depth direction of the rendering area 20

As described above, the information processing apparatus 1 detects the pressing force value P at the point on a two-dimensional display screen designated by the user and recognizes the detected amount as a coordinate value (z) in the depth direction of the rendering area 20. Such processing operations of the information processing apparatus 1 allow users to easily designate an arbitrary three-dimensional position in the rendering area 20 forming a three-dimensional space by designating a point on a two-dimensional display screen through the touch panel 11. In addition, since these processing operations are close to the actual three-dimensional position designating operation in the real world, even users who are not familiar with device operations can easily designate an arbitrary three-dimensional position within the rendering area 20 without any education or trainings.

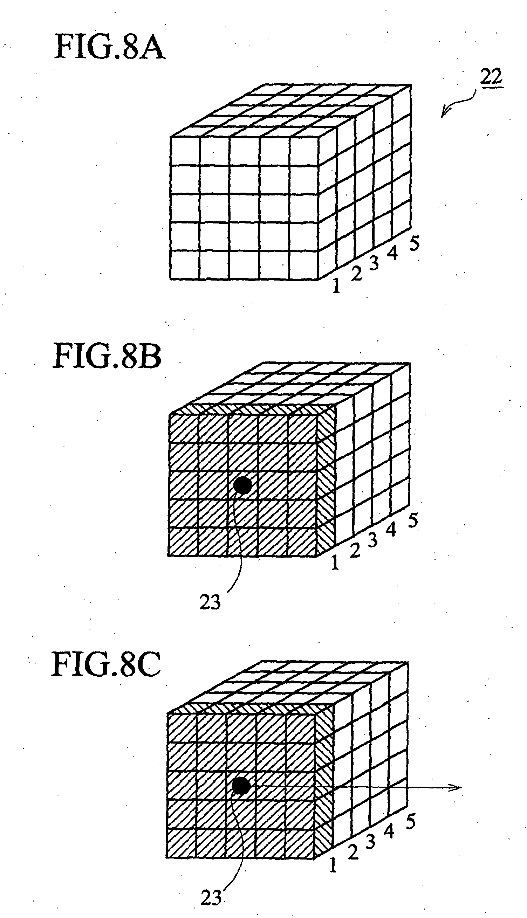

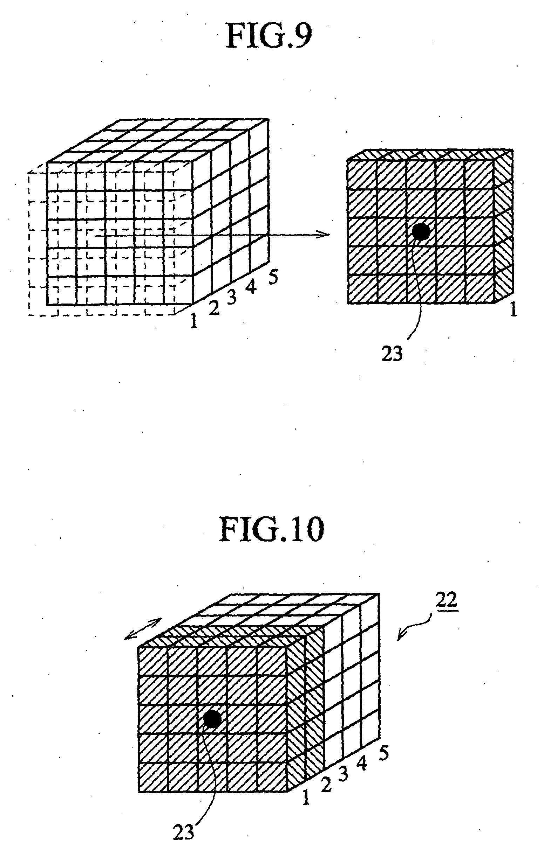

The designating operation of a three-dimensional position as described above is suitable when applied to operations to an object described below. For example, in the case where an object 22 composed of five layers of object elements arranged in three dimensions as shown in Figure 8(a) is displayed on the display section 5 and a user designates a designated point 23 in the object (Figure 8(b)) to move this designated point 23 (Figure 8(c)) so that the object elements selected by the designated point 23 may be moved as if to turn a page as shown in Figure 9, the user can intuitively change the number of object elements to select as shown in Figure 10 by adjusting the magnitude of the pressing force value P and thus easily move the desired object elements.

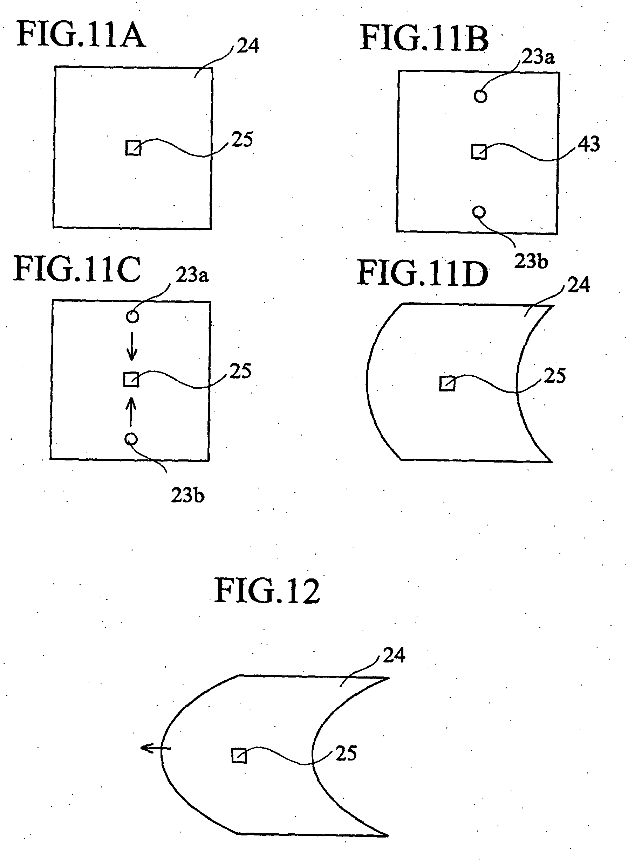

As shown in Figures 11(a) to (c), when a user designates two points 23a, 23b on the touch panel 11 and then moves these two points so as to pick an object 25 disposed on a texture 24, the user can feel as if he or she actually picked the object 25 in the real world if the shape of the texture 24 changes according to the magnitude of the pressing force value P as shown in Figure 11(d) or 12.

### "Operation Without a Double-Click"

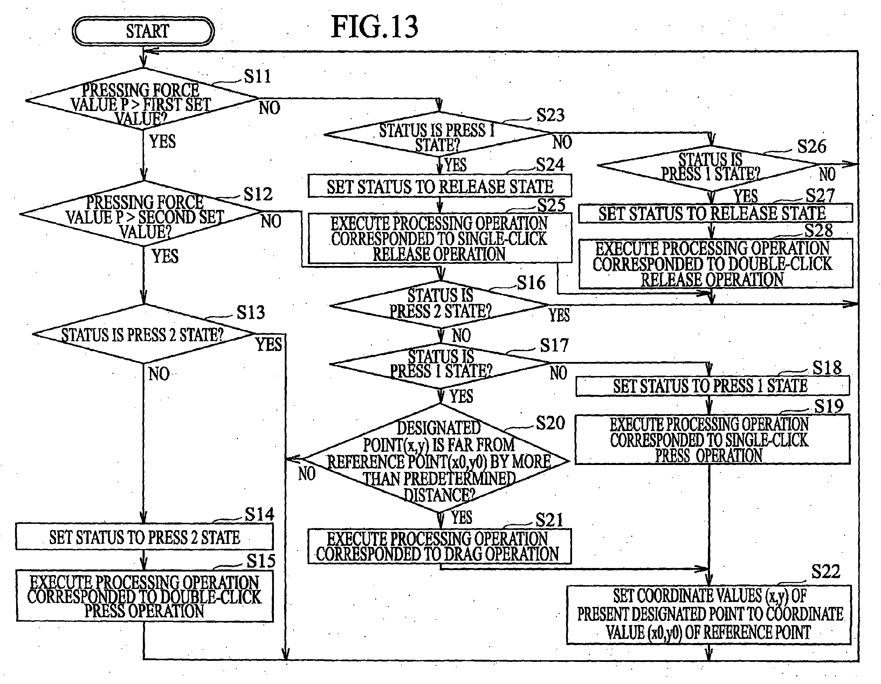

The information processing apparatus 1 configured as described above allows users to operate icons representing a folder file or an application program displayed on the display section 5 with a feeling of natural operations close to those in the real world and also allows users to direct the apparatus to execute processing corresponding to each operation, without a single-click operation or double-click operation that is usually adopted in general computer systems. Now referring to a flowchart in Figure 13, the processing operation of the information processing apparatus 1 when a user operates an icon will be described in detail.

The flowchart of Figure 13 starts when the CPU 2 detects a change of the coordinate values (x, y) and the pressing force value P of a designated point on the touch panel 11 pressed by the user (event detection). The CPU 2 then executes the following processing according to the interface program 8.

The CPU 2 stores in the RAM 3 the information related to the coordinate values (x, y) and the pressing force value P at the designated point before the event detection according to the interface program 8. In addition, the user inputs in advance to the apparatus the first and second set values P1, P2 (P1 < P2) that are used when the CPU 2 determines which operation of single-click operation or double-click operation has been performed. Then, the CPU 2 stores in the ROM 4 the input values according to the input of the first and second set values P1, P2.

In steps S11 and S12, the CPU 2 compares the detected pressing force value P with the first and the second set values P1, P2 stored in the ROM 4 and executes processing after classifying the cases according to the comparison result as follows.

The operations of the information processing apparatus will be described based on three cases: (i) second set value P2 < pressing force value P, (ii) first set value P1 < pressing force value P < second set value P2, and (iii) pressing force value P < first set value P1.

In the following processing, the CPU 2 stores in the RAM 3 a state of the last event in order to recognize the detected event such that the user is pressing down the designated point with his or her finger or that the user is going to release his or her finger from the designated point. Then the CPU 2 compares the detected event with the last event to recognize the change in the state thereby to determine the detected event. More specifically, the CPU 2 stores in the RAM 3 three conditions as status: the first set value P1 corresponding to a single-click operation is given to the designated point (PRESS 1 state), the second set value P2 corresponding to a double-click operation is given to the designated point (PRESS 2 state), and the finger is released from the designated point (hereinafter described as RELEASE state).

### (i) Second Set Value P2 < Pressing Force Value P

In the case where the second set value P2 < the pressing force value P, the CPU 2 advances the operation processing to step S13 from steps S11, S12. In step S13, the CPU 2 determines whether the status is the PRESS 2 state or not, referring to the data within the RAM 3.

If the status is the PRESS 2 state as a result of the determination processing in step S13, the CPU 2 waits until the next event is detected. On the other hand, if the status is not the PRESS 2 state as a result of the determination, the CPU 2 advances the operation processing to step S 14.

In step S14, the CPU 2 sets the status to the PRESS 2 state and stores the status in the RAM 3. Then, the processing in step S14 completes and proceeds to step S15 from step S14.

In step S15, the CPU 2 executes the processing corresponding to a double-click operation such as activation of an application program represented by an icon. Then, the operation processing for the detected event completes and the CPU 2 waits until the next event is detected.

### (ii) First Set Value P1 < Pressing Force Value P < Second Set Value P2

In the case where the first set value P1 < the pressing force value P < the second set value P2, the CPU 2 advances the operation processing to step S16 from steps S11, S12. In step S16, the CPU 2 determines whether the status is the PRESS 2 state or not, referring to the data within the RAM 3. If the status is the PRESS 2 state as a result of the determination, the CPU waits until the next event is detected. On the other hand, when the status is not the PRESS 2 state as a result of the determination, the CPU 2 advances the operation processing to step S17.

In step S17, the CPU 2 determines whether the status is the PRESS 1 state or not, referring to the data within the RAM 3. If the status is not the PRESS 1 state as a result of the determination, the CPU 2 sets the status to the PRESS 1 state in step S18, and in step S19 executes the processing corresponding to a single-click operation such as bringing an application program represented by an icon into a selected state. When the processing in step S19 completes, the CPU 2 advances the operation processing to step S22.

If the status is the PRESS 1 state as a result of the determination processing in step S17, the CPU 2 determines whether a designated point (x, y) is far from a reference point (x0, y0) by a predetermined distance (DX1, DX2) or more in step S20. If the designated point is not far from the reference point by the predetermined distance or more, the CPU2 waits until the next event is detected. On the other hand, if the designated point is far from the reference point by the predetermined distance or more, the CPU 2 determines that the detected event is a drag operation to move the icon that has been selected by the user with single-click operation, and in step S21 the CPU 2 executes the processing operation corresponding to the drag operation. Then, the processing of step S21 completes and then proceeds to step S22 from step S21.

In step S22, the CPU 2 stores in the RAM 3 the coordinate values (x, y) of the present designated point as reference coordinate values (x0, y0) used in the subsequent processing. Then, the operation processing for the detected event completes and the CPU 2 waits until the next event is detected.

### (iii) Pressing Force Value P < First Set Value P1

In the case where the pressing force value P < the first set value P1, the CPU 2 advances the operation processing to step S23 from step S11. In step S23, the CPU 2 determines whether the status is PRESS 1 state or not, referring to the data within the RAM 3. If the status is the PRESS 1 state as a result of the determination, the CPU 2 determines that the detected event is a movement of taking the finger off after the user single-clicks an icon (hereinafter described as "release motion after single-click operation"). Then, in step S24, the CPU 2 sets the status to RELEASE state, and in step S25 the CPU 2 executes the processing corresponding to the "release motion after single-click operation" such as opening a folder if the icon is a folder. When the processing in step S25 completes, the CPU 2 returns the operation processing to step S11.

If the status is not the PRESS 1 state as a result of the determination in step S23, the CPU 2 determines whether the status is PRESS 2 state or not, referring to the data within the RAM 3 in step S26. If the status is the PRESS 2 state as a result of the determination, the CPU 2 determines that the detected event is a movement of taking the finger off after the user double-clicks an icon (hereinafter described as "release motion after double-click operation"). Then, in step S27 the CPU 2 sets the status to RELEASE state, and in step S28 the CPU 2 executes the processing corresponding to the "release motion after double-click operation". When the processing in step S28 completes, the CPU 2 returns the operation processing to step S11 described above. On the other hand, if the CPU 2 determines that the status is not the PRESS 2 state in step S26, the CPU returns the operation processing to step S11 from step S26.

As described above, the information processing apparatus according to the first embodiment determines which of single-click operation and double-click operation is designated, referring to the magnitude of the pressing force value at the point designated by a user on a two-dimensional display screen, and executes the processing corresponding to the respective operations according to the determination result. Such processing allows users to operate an icon displayed on a two-dimensional display screen without troublesome operation such as pressing the same point again after taking their finger off the touch panel 11. Therefore, even users who are not familiar with the operation of devices can operate an icon easily and naturally. In addition, users can operate an icon faster than a double-click operation, because they do not have to once take their finger off the touch panel 11.

Although the operation processing is applied to an icon according to the above description, it can be applied also to a slide-type volume control function displayed on the display section 5.

### SECOND EMBODIMENT

The information processing apparatus according to the second embodiment of the present invention differs in only configuration and operation of the operation input section 6 from those of the first embodiment. Therefore, the configuration and operation of the operation input section 6 of the information processing apparatus according to the second embodiment will be described in detail, and descriptions of other components will be omitted because they are the same as the forgoing description.

### Structure of Operation Input Section

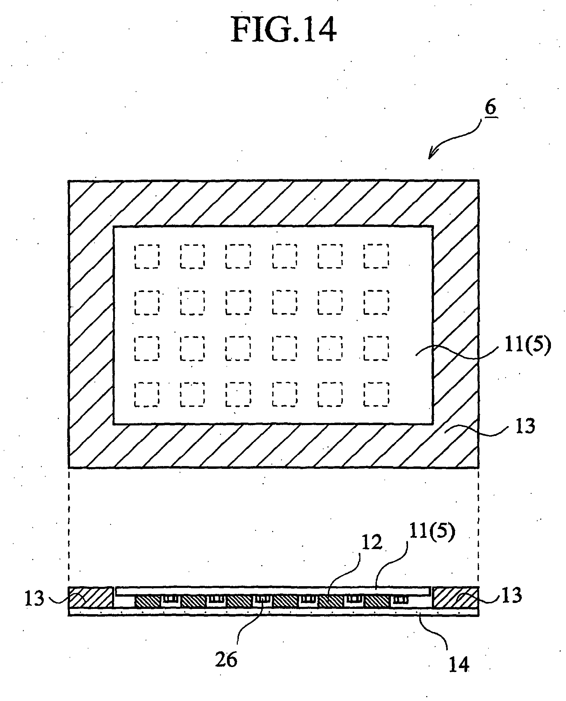

The operation input section 6 according to the second embodiment of the present invention differs from that in the first embodiment, and as shown in Figure 14, the operation input section 6 has a plurality of vibration elements 26 provided on the surface of the touch panel 11 that is not connected with the pressure sensitive elements 12. The vibration elements 26 each consist of piezoelectric elements, solenoids, etc., and produce vibration corresponding to an operation according to the control by the CPU 2 when a user presses the touch panel 11.

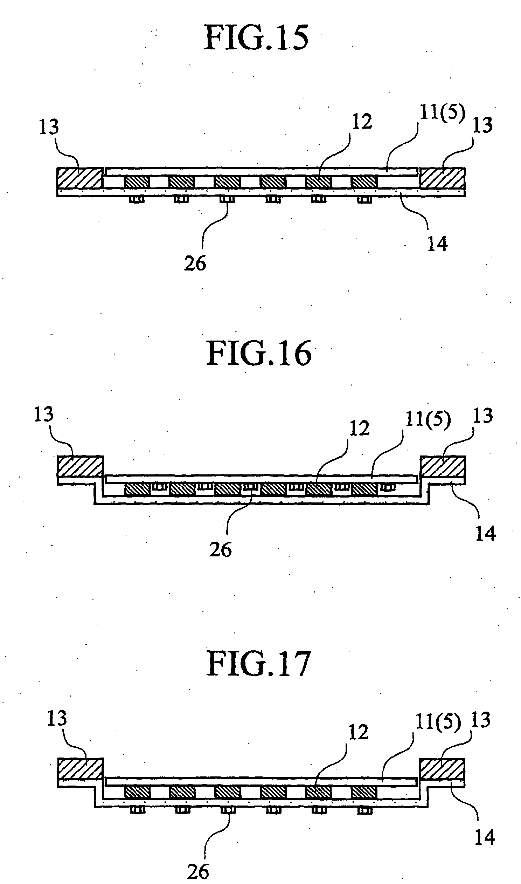

The vibration elements 26 shown in Figure 14 are connected to the surface of the touch panel 11, however, they may be connected to the backside of the back panel 14 as shown in Figures 15 to 17. In addition, the CPU 2 may control the respective vibration elements 26 so that there can be a plurality of vibration patterns.

Furthermore, a vibration pattern of the click vibration produced when a mechanical button is pressed may be stored in the ROM 4 so that this vibration pattern may be reproduced when a user executes predetermined processing. This provides a user with a feeling as if he or she pushed a mechanical button.

Moreover, the magnitude of the produced vibration may be variable according to the change of the pressing force value P. In addition, a plurality of the vibration elements 26 are provided in this embodiment, however, only one vibration element may be provided to produce vibration if a user touches only one point on the surface of the touch panel 11.

As described above, in the second embodiment, the operation input section 6 has a structure such that the vibration elements 26 are added to the operation input section 6 of the first embodiment so as thereby to produce the vibration corresponding to an operation according to the control of the CPU 2 when a user presses the touch panel 11.

### Operation of Information Processing Apparatus

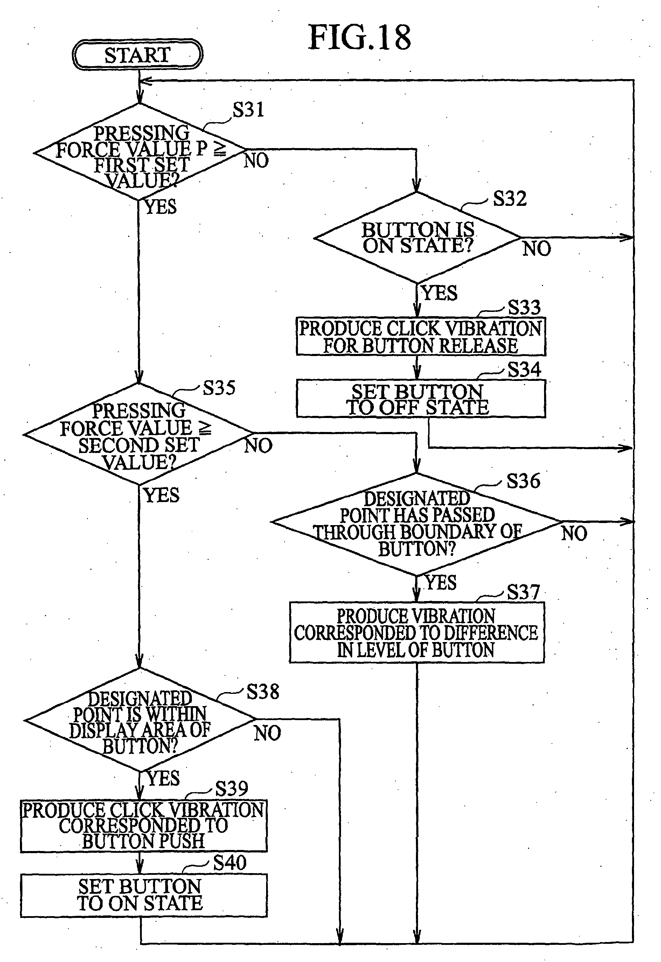

The information processing apparatus having the configuration described above allows a user to operate an object displayed on a two-dimensional display screen with a feeling of natural operation, by executing the processing of the flowchart shown in Figure 18.

In the following example, the display section 5 displays on a two-dimensional display screen thereof, as an object, a button for designating execution of predetermined processing to the information processing apparatus, and a user presses the button displayed on the two-dimensional display screen through the touch panel 11 and turns the button ON (selected state), so that the user can direct the information processing apparatus to execute the processing assigned to each button, for example, for opening another window screen.

The flowchart shown in Figure 18 starts when the CPU 2 detects the change of the coordinate values (x, y) at the point on the touch panel 11 pressed down by the user (event detection) and the pressing force value P thereat. The CPU 2 then executes the following processing according to the interface program 8.

In step S31, the CPU 2 determines whether the pressing force value P is the first set value P1 or larger. This determination processing is performed to determine whether the user is touching the touch panel 11 or not. When the pressing force value P is not the first set value P1 nor larger, the CPU 2 determines whether the button displayed on the two-dimensional screen is in the ON state or not in step S32. The above-described first set value P1 is set in advance to the depressing force value detected when the user lightly touches the panel 11.

As a result of the determination processing of step S32, when the button is in the ON state, the CPU 2 determines that the detected event is a movement of taking the finger off after the user presses down the touch panel 11 corresponding to the button. Then in step S33, the CPU 2 produces click vibration for a button release by controlling the vibration elements 26. Then, in step S34, the CPU 2 sets the button pressed by the user to the OFF state and waits until the next event is detected. On the other hand, as a result of the determination processing in step S32, when the button is not in the ON state, the processing for the detected event completes and the CPU 2 waits until the next event is detected.

As a result of the determination processing in step S31, when the pressing force value P is the first set value P1 or larger, the CPU 2 advances the operation processing to step S35 from step S31. In step S35, the CPU 2 determines whether the pressing force value P is the second set value P2 (P1 < P2) or larger. As a result of the determination processing in step S35, if the pressing force value P is not the second set value P2 nor larger, the CPU 2 determines in step S36 whether the moved point has passed through a position corresponding to a boundary of the button displayed on the two-dimensional screen. Note that the above-noted second set value P2 is set in advance to the pressing force value detected when the user depresses the touch panel 11 with his or her finger.

If the result of the determination processing in step S36 indicates that the moved point has passed through the position corresponding to the boundary, the CPU 2 produces, in step S37, the vibration corresponding to a difference in level between the part on which the button is displayed and the part on which the button is not displayed, when the moved point passes through the position corresponding to the boundary. This allows the user to recognize the shape of the button displayed on the two-dimensional display screen. Then, the processing for the detected event completes and the CPU 2 waits until the next event is detected. On the other hand, if the result of the determination processing in step S36, indicates that the designated point has not passed through the position corresponding to the boundary, the processing for the detected event completes and the CPU 2 waits until the next event is detected.

When the result of the determination processing in step S35 indicates that the pressing force value P is the second set value P2 or larger, the CPU 2 advances the operation processing to step S38 from step S35. Then, in step S38, the CPU 2 determines whether the moved point is within a display area for the button on the two-dimensional display screen or not. If the result of the determination processing in step S38 indicates that the moved point is within the display area for the button, the CPU 2 determines that the detected event is the movement of pressing the touch panel 11 corresponding to the button, and in step S39, the CPU 2 produces click vibration corresponding to the depressing operation of the button by controlling the vibration elements 26 so that user can recognize that the button has been pressed. Then, in step S40, the CPU 2 sets the button pressed by the user to the ON state and waits until the next event is detected. On the other hand, if the result of the determination processing in step S38 indicates that the moved point is not within the display area of the button, the processing for the detected event completes and the CPU 2 waits until the next event is detected.

As described above, in this second embodiment, when the user operates the object displayed on the two-dimensional display screen through the touch panel 11, the information processing apparatus feeds back to the user, the sense of touch in accordance with the position and pressure on the pressed point on the touch panel 11, such as click feeling depending on the position or shape of the object and the pressing strength thereto. Therefore, users can operate the object with a feeling of natural operation, and accordingly the number of operation mistakes can be reduced.

Though the embodiments to which the invention made by the present inventors is applied have been described above, the invention is not limited to the statement and the drawings that are a part of the invention disclosure according to the embodiments.

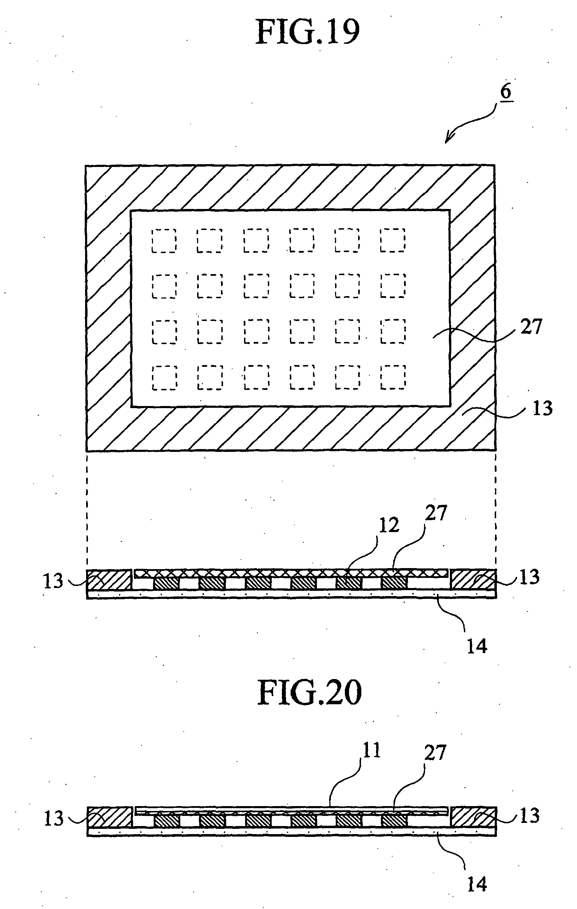

For example, in the information processing apparatus according to the above-described embodiments, the touch panel 11 is built in or attached to the display section 5. However, it is also allowable to use, as shown in Figure 19, a flexible display 27 made of soft boards such as a plastic film for the display section 5 instead of using the touch panel 11, and a plurality of the pressure-sensitive elements 12 may be arranged on the back surface of the flexible display 27.

Since such configuration allows the shape of the display section 5 to be changed flexibly according to a user's pressing operation, it becomes possible to detect the pressure value on an arbitrary point pressed by a user more accurately compared to the case where a display device formed of hard boards such as a liquid crystal display or a CRT device is used as the display section 5.

In addition, above-described configuration also makes it possible to accurately detect the pressure values of a plurality of points even when a user presses several points on a screen at the same time. In this case, it is allowable to attach the touch panel 11 to the surface of the flexible display 27 as shown in Figure 20 in order to detect the point designated by the user using the touch panel 11 so that the number of the pressure-sensitive elements 12 arranged on the back surface of the flexible display 27 can be reduced. In addition, it is possible that the vibration elements are provided as described in the above embodiments and the sense of the touch is fed back to the user according to the operation when the user touches the flexible display 27.

Moreover, the above-described configuration makes it possible to detect the pressing force values of a plurality of points on a two-dimensional display screen in an analog form. Therefore, when the configuration is applied to an operation screen of an electronic musical instrument such as a piano, for example, it is possible to realize an electronic musical instrument capable of high-grade performance processing by inputting a plurality of sounds. In addition, when the configuration is applied to an operation screen of a video game, it is possible to realize a game machine that allows operations performed by both hands and simultaneous operations of every sort of function with a plurality of fingers.

Moreover, since the above-described configuration makes it possible to detect the shape of the user's finger or hand that touches a two-dimensional display screen, the way of touching the two-dimensional display screen, and the user's movement, completely new operation method based on the shape of a hand or finger, or movement can be realized by associating information thereof with call processing of predetermined functions.

Moreover, since the above-described configuration makes it possible to recognize pressure distribution data of the user's operation, authentication processing that has never existed before can be realized by extracting the user's characteristics, such as the shape of the hand or finger touching the two-dimensional screen, pressure distribution, or movement characteristics and by executing authentication processing based on the extracted characteristics.

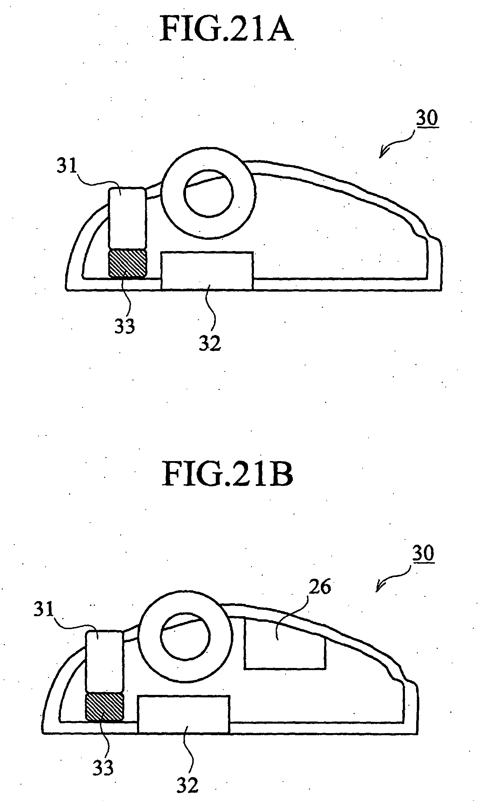

The operation input section 6 may be a mouse pointer 30 shown in Figure 21(a), for example. The mouse pointer 30 shown in Figure 21(a) is a general mouse pointer and has a button 31 for switching on and off according to the operation of a user, a detector 32 for detecting a position on a screen designated by the user, and a pressure-sensitive element 33 provided at the bottom of the button 31. The pressure-sensitive element 33 detects a pressing force value when the user operates the button 31 and outputs to the CPU 2 a pressure detection signal that indicates the magnitude of the pressing force value. Though the mouse pointer 30 can generally sense only ON/OFF state of the button 31, the mouse pointer 30 according to the configuration shown in Figure 21(a) can executes the processing described in the above embodiments according to the magnitude of the pressing force value when the user operates the button 31. In addition, the mouse pointer 30 makes it possible to easily input analog values during various operations such as scrolling, moving, scaling, moving a cursor, controlling volume, etc., by detecting the pressing force value in an analog form when the user operates the button 31. It should be noted that the vibration element 26 may be provided to the mouse pointer 30 as shown in Figure 21(b), and such configuration makes it possible to feed back the sense of touch corresponding to the operation to the user.

In addition, it is also allowable that pressing force values Pmax, Pmin corresponding to the maximum value and minimum value, respectively, of a depth value within the three-dimensional space are defined and the pressing force value P at a designated point is compared to these pressing force values Pmax and Pmin in order to calculate a depth value within a three-dimensional space designated by a user.

Moreover, it is also allowable that the relation between a pressing force value P and a depth value is listed in a table used for retrieving a pressing force value P at the designated point so that a depth value within a three-dimensional space designated by a user may be calculated. In this case, the table may be prepared in which an appropriate range (for example, pressing force value P = 1 to 3) is defined for the pressing force value P corresponding to one depth value (for example, z = 1) according to the position of an object arranged within a three-dimensional space. Such configuration facilitates the designation operation of a depth value or object, because a depth value corresponding to a pressing force value P is recognized if the pressing force value P of a designated point is within the defined range.

Although the information processing apparatus 1 detects and uses the pressing force value P of a designated point as a depth value of the designated point in the above embodiment, it is also possible to use as a depth value of a designated point, a value detected by using a non-contact input device for detecting a distance (distance in depth direction) between an object and the input device utilizing static electricity or by using a camera device (the so-called stereo camera) for detections in which a movement of a user in vertical (depth) direction to a display screen of a display device is detected using a technique of pattern matching and the like. In this case, it is desirable that the information processing apparatus 1 changes the depth value of the designated point according to the change of the detected value.

All other embodiments or application made by those skilled in the art based on the embodiment are regarded as part of the present invention.

### INDUSTRIAL APPLICABILITY

The present invention is applicable to processing for designating an arbitrary point within a three-dimensional space displayed on a two-dimensional display screen.

## Claims

1. An information processing method comprising:
a step of displaying a three-dimensional space on a two-dimensional display screen;
a step of detecting a coordinate value and a depth value of a point within the two-dimensional display screen designated by a user; and
a step of recognizing a position of the point within the three-dimensional space designated by the user according to the detected coordinate value and depth value.

2. The information processing method according to claim 1, further comprising:
a step of displaying a cursor on the point on the two-dimensional display screen designated by the user; and
a step of displaying the cursor that moves in a depth direction of the two-dimensional display screen according to a change of the depth value.

3. The information processing method according to claim 2, further comprising:
a step of recognizing a position at which the cursor stops as the position within the three-dimensional space designated by the user.

4. The information processing method according to claim 2, further comprising:
a step of changing at least one of size, color, and brightness of the cursor according to the movement of the cursor.

5. The information processing method according to claim 2, further comprising:
a step of executing predetermined processing in response to interference between the cursor and an object within the three-dimensional space.

6. The information processing method according to claim 5, wherein the predetermined processing is processing for producing at least one of vibration and sound.

7. An information processing method comprising:
a step of displaying at least one object on a two-dimensional display screen;
a step of detecting a coordinate value and a depth value of a point on the two-dimensional display screen designated by a user; and
a step of executing processing for the object designated by the coordinate value according to the depth value.

8. The information processing method according to claim 7, further comprising:
a step of selecting the processing by determining whether the depth value is a predetermined threshold value or more.

9. The information processing method according to claim 7, further comprising:
a step of producing at least one of vibration and sound according to the change of the coordinate values and depth value.

10. A computer-readable recording medium having recorded therein an information processing program to be executed a computer, wherein the information processing program comprises the steps of:
displaying a three-dimensional space on a two-dimensional display screen;
detecting a coordinate value and a depth value of a point within the two-dimensional display screen designated by a user; and
recognizing a position of the point within the three-dimensional space designated by the user according to the detected coordinate value and depth value.

11. The computer-readable recording medium having recorded therein an information processing program according to claim 10, wherein the information processing program further comprises the steps of:
displaying a cursor on the point on the two-dimensional display screen designated by the user; and
displaying the cursor that moves in a depth direction of the two-dimensional display screen according to a change of the depth value.

12. The computer-readable recording medium having recorded therein an information processing program according to claim 11, wherein the information processing program further comprises the step of:
recognizing a position at which the cursor stops as the position within the three-dimensional space designated by the user.

13. The computer-readable recording medium having recorded therein an information processing program according to claim 11, wherein the information processing program further comprises the step of:
changing at least one of size, color, and brightness of the cursor according to the movement of the cursor.

14. The computer-readable recording medium having recorded therein an information processing program according to claim 11, wherein the information processing program further comprises the step of:
executing predetermined processing in response to interference between the cursor and an object within the three-dimensional space.

15. The computer-readable recording medium having recorded therein an information processing program according to claim 14, wherein the predetermined processing is processing for producing at least one of vibration and sound.

16. A computer-readable recording medium having recorded therein an information processing program to be executed by a computer, wherein the information processing program comprises the steps of:
displaying at least one object on a two-dimensional display screen;
detecting a coordinate value and a depth value of a point on the two-dimensional display screen designated by a user; and
executing processing for the object designated by the coordinate value according to the depth value.

17. The computer-readable recording medium having recorded therein an information processing program according to claim 16, wherein the information processing program further comprises the step of:
selecting the processing by determining whether the depth value is a predetermined threshold value or more.

18. The computer-readable recording medium having recorded therein an information processing program according to claim 16, wherein the information processing program further comprises the step of:
producing at least one of vibration and sound according to the change of the coordinate values and depth value.

19. An information processing program to be executed by a computer, comprising the steps of:
displaying a three-dimensional space on a two-dimensional display screen;
detecting a coordinate value and a depth value of a point within the two-dimensional display screen designated by a user; and
recognizing a position of the point within the three-dimensional space designated by the user according to the detected coordinate value and depth value.

20. An information processing program to be executed by a computer, comprising the steps of:
displaying at least one object on a two-dimensional display screen;
detecting a coordinate value and a depth value of a point on the two-dimensional display screen designated by a user; and
executing processing for the object designated by the coordinate value according to the depth value.

21. An information processing apparatus comprising:
a display section operable to display a three-dimensional space on a two-dimensional display screen;
a coordinate value detector operable to detect a coordinate value of a point on the two-dimensional display screen designated by a user;
a depth value detector operable to detect a depth value of the point on the two-dimensional display screen; and
a controller operable to recognize a position of the point within the three-dimensional space designated by the user according to the detected coordinate value and depth value.

22. The information processing apparatus according to claim 21, wherein the controller displays a cursor on the point on the two-dimensional display screen and displays the cursor that moves in a depth direction to the two-dimensional display screen according to a change of the depth value.

23. The information processing apparatus according to claim 22, wherein the controller recognizes a position at which the cursor stops as the position within the three-dimensional space designated by the user.

24. The information processing apparatus according to claim 22, wherein the controller changes at least one of size, color, and brightness of the cursor according to the movement of the cursor.

25. The information processing apparatus according to claim 22, wherein the controller executes predetermined processing in response to interference between the cursor and an object within the three-dimensional space.

26. The information processing apparatus according to claim 25, wherein the predetermined processing is processing for producing at least one of vibration and sound.

27. The information processing apparatus according to claim 21, wherein the coordinate value detector and the depth value detector are a touch panel and a pressure-sensitive element, respectively.

28. An information processing apparatus comprising:
a display section operable to display at least one object on a two-dimensional display screen;
a coordinate value detector operable to detect a coordinate value of a point on the two-dimensional display screen designated by a user;
a depth value detector operable to detect a depth value of the point on the two-dimensional display screen; and
a controller operable to execute processing for the object designated by the coordinate value according to the depth value.

29. The information processing apparatus according to claim 28, wherein the controller selects the processing by determining whether the depth value is a predetermined threshold value or more.

30. The information processing apparatus according to claim 28, wherein the controller produces at least one of vibration and sound according to the change of the coordinate values and depth value.

31. The information processing apparatus according to claim 28, wherein the coordinate value detector and the depth value detector are a touch panel and a pressure-sensitive element, respectively.
